# EUROPÄISCHE PATENTANMELDUNG

(11) **EP 4 456 392 A1**
(43) Veröffentlichungstag der Anmeldung: **30.10.2024**
(21) Anmeldenummer: 23169843.2
(22) Anmeldetag: 25.04.2023
(51) Int. Cl.: H02K 15/12

(54) **VERFAHREN ZUR IMPRÄGNIERUNG SOWIE EINE IMPRÄGNIERVORRICHTUNG**

(71) Anmelder: Siemens Aktiengesellschaft, 80333 München (DE)
(72) Erfinder: Büttner, Klaus, 97618 Hollstadt (DE); Katzenberger, Tobias, 97631 Bad Königshofen STT Untereßfeld (DE); Kirchner, Klaus, 97645 Ostheim (DE); Plochmann, Bastian, 91413 Neustadt an der Aisch (DE); Warmuth, Matthias, 97618 Windshausen (DE)
(74) Vertreter: Siemens Patent Attorneys

(57) **Zusammenfassung**

Die Erfindung betrifft ein Verfahren zur Imprägnierung eines wenigstens eine Wicklung (41) tragenden Körpers (4), insbesondere für eine elektrische Maschine (1), beispielsweise für einen Rotor (3) oder Stator (2), wobei der Körper (4) mit einem, vorzugsweise Harz aufweisenden, Imprägniermaterial (6) beträufelt wird, wobei eine Kapazität (30) zwischen zwei Phasen (U, V, W) der Wicklung (41) ermittelt wird und/oder wobei eine Kapazität (30) zwischen einer Phase (U, V, W) der Wicklung (41) gegen Erdpotential (G) ermittelt wird, wobei eine Menge aufgenommenen Imprägniermaterials durch eine Änderung der Kapazität (30) ermittelt wird, wobei der Körper (4) vor und/oder während und/oder nach der Beträufelung um eine Rotationsachse (A) bewegt wird,wobei die Wicklung (41) vor und/oder während und/oder nach der Beträufelung zur Erwärmung der Wicklung von Strom durchflossen wird, wobei eine Dosiermenge und/oder ein Dosierort und/oder eine Einspeisung von Energie in die Wicklung zur Änderung einer Wicklungstemperatur, insbesondere der einzelnen Phasen, in Abhängigkeit der ermittelten Kapazität angepasst wird.

## Beschreibung

Die Erfindung betrifft ein Verfahren zur Imprägnierung sowie eine Imprägniervorrichtung.

Die Imprägnierung von Elektromotoren, also insbesondere das Eintauchen, Beträufeln bzw. ein Beschichten der Rotoren und/oder Statoren, mit, vorzugsweise flüssigem, Imprägnierharz und die meist anschließende, insbesondere thermische, Härtung ist im Herstellungsprozess des Motors ein besonders energieaufwändiger Schritt.

Es sind verschiedene Verfahren zur Imprägnierung bekannt, z. B. Tauchen, Träufeln oder auch eine Flutung. Hierbei wird meist flüssiges Harz auf die zu imprägnierenden Komponenten aufgebracht. Eine anschließende Trocknung und Aushärtung über mehrere Stunden bei ca. 150°C ist besonders zeit- und energieintensiv. Zudem wird dafür ein Ofen, beispielsweise in Form einer Ofenstrecke, benötigt. Anschließend werden die Komponenten meist in einer Kühlstrecke abgekühlt, um Taktzeiten zu verkürzen und eine Weiterarbeit zu ermöglichen. Auch dies bedeutet einen hohen Energieaufwand.

Zudem sind die bisher bekannten Verfahren nicht flexibel, eine Nachbesserung im laufenden Prozess ist nicht möglich.

Der Erfindung liegt die Aufgabe zugrunde, die Imprägnierung von Elektromotoren zu verbessern.

Die Lösung der Aufgabe gelingt durch ein Verfahren gemäß Anspruch 1, d. h. ein Verfahren zur Imprägnierung eines wenigstens eine Wicklung tragenden Körpers, insbesondere für eine elektrische Maschine, beispielsweise für einen Rotor oder Stator, wobei der Körper mit einem, vorzugsweise Harz aufweisenden, Imprägniermaterial beträufelt wird, wobei eine Kapazität zwischen zwei Phasen der Wicklung ermittelt wird und/oder wobei eine Kapazität zwischen einer Phase der Wicklung gegen Erdpotential ermittelt wird, wobei eine Menge aufgenommenen Imprägniermaterials durch eine Änderung der Kapazität ermittelt wird, wobei der Körper vor und/oder während und/oder nach der Beträufelung um eine Rotationsachse bewegt wird, wobei die Wicklung vor und/oder während und/oder nach der Beträufelung zur Erwärmung der Wicklung von Strom durchflossen wird, wobei eine Dosiermenge und/oder ein Dosierort und/oder eine Einspeisung von Energie in die Wicklung zur Änderung einer Wicklungstemperatur, insbesondere der einzelnen Phasen, in Abhängigkeit der ermittelten Kapazität angepasst wird.

Eine Einzelobjekt-Messung während des Imprägniervorgangs sowie während des Härtungsvorgangs ist hierbei besonders von Vorteil, sodass in den laufenden Prozess z.B. durch Änderung der Temperatur und Dosiermenge individuell eingegriffen werden kann. Dies ist ressourcenschonend und ermöglicht eine qualitativ hochwertige Imprägnierung.

Ein Dosierort ist bspw. ein Wickelkopf (innen und/oder außen, Nutaustritt, verschiedene Phasen).

Das Verfahren ist besonders gut geeignet für Rotoren und/oder Statoren dynamoelektrischer rotatorischer Maschinen. Ferner ist das Verfahren auch geeignet, um elektrische Maschinen im Allgemeinen, z. B. Transformatoren, zu imprägnieren.

Imprägnieren steht vorteilhaft im Sinne der vorliegenden Erfindung für Imprägnieren, Verfestigen oder Elektroisolieren.

Das Imprägniermaterial weist vorzugsweise Harz auf.

Das Harz ist vorzugsweise dergestalt, dass es unter Temperaturerhöhung aushärtet.

Das Imprägniermaterial kann ausschließlich Harz aufweisen. Das Imprägniermaterial kann auch ein Harz-Härter-Gemisch sein, insbesondere in Form eines mehrkomponentigen Harzsystems, aufweisend wenigstens zwei Komponenten, wobei eine erste Komponente ein Harz ist, wobei eine zweite Komponente ein Härter ist.

Das Harz ist vorteilhaft ein Epoxidharz.

Der Härter ist vorteilhaft aminbasiert.

Der Körper wird vor und/oder während und/oder nach der Beträufelung um eine Rotationsachse bewegt.

Der Körper vollzieht vorteilhaft keine Dauerrotation, sondern pendelt vorteilhaft zwischen zwei Stellungen.

Vorteilhaft ist eine Ausführung, wonach die Kapazität zyklisch ermittelt wird.

Besonders vorteilhaft dauert ein Zyklus wenigstens zwei Sekunden und höchstens 20 Sekunden an, vorzugsweise wenigstens fünf und höchstens zehn Sekunden.

Dies bietet den Vorteil, dass, wenn beispielsweise alle fünf bis zehn Sekunden gemessen wird, z. B. zwischen Heizphasen, eine Füllstandsverteilung über die Zeit ermitteln lässt.

Vorteilhaft ist eine Ausführung, wonach der Körper um einen ersten Winkel in einer ersten Drehrichtung, vorzugsweise in positiver Drehrichtung, gedreht wird, wobei der Körper um den negativen ersten Winkel oder einen zweiten Winkel in einer zweiten Drehrichtung, vorzugsweise in negativer Drehrichtung, gedreht wird.

In anderen Worten bedeutet dies, dass der Körper um einen ersten Winkel in Vorwärtsrichtung gedreht wird, wobei der Körper um den ersten Winkel oder einen zweiten Winkel in Rückwärtsrichtung gedreht wird.

Der Körper rotiert vorteilhaft in einer Pendelrotation. Vorteilhaft vollzieht der Körper keine fortlaufende Bewegung mit einer bestimmten Winkelgeschwindigkeit.

Vorteilhaft wird der Körper in der ersten Drehrichtung bewegt, angehalten (also Geschwindigkeit=0) und anschließend in der zweiten Drehrichtung bewegt.

Vorteilhaft ist eine Ausführung, wonach der Körper in der ersten Drehrichtung mit einer ersten Drehgeschwindigkeit bewegt wird, wobei der Körper in der zweiten Drehrichtung mit einer zweiten Drehgeschwindigkeit bewegt wird, wobei die erste Drehgeschwindigkeit größer ist als die zweite Drehgeschwindigkeit.

Die erste Drehgeschwindigkeit und die zweite Drehgeschwindigkeit können jedoch auch gleich sein.

Die Drehgeschwindigkeit liegt vorteilhat zwischen 5 1/min und 40 1/min.

So kann eine besonders homogene Verteilung des Imprägniermaterials erreicht werden.

Vorteilhaft ist eine Ausführung, wonach die Drehgeschwindigkeit in Abhängigkeit der ermittelten Kapazität angepasst wird.

Dies bietet den Vorteil, dass eine gute Harzverteilung erreicht wird.

Vorteilhaft ist eine Ausführung, wonach das Imprägniermaterial mittels einer Dosierdüse auf den Körper bzw. in Richtun des Körpers geleitet wird.

Auf diese Weise gelingt die Beträufelung besonders gut und gleichmäßig.

Es können auch zwei oder mehr Dosierdüsen ausgebildet sein.

Vorteilhaft ist eine Ausführung, wonach eine Dosiermenge, die auf den Körper aufgetragen wird, wenn er in der ersten Drehrichtung bewegt wird, größer ist als eine Dosiermenge, die auf den Körper aufgetragen wird, wenn er in der zweiten Drehrichtung bewegt wird.

In anderen Worten bedeutet dies: Die Dosiermenge kann z.B. während einer vollen Umdrehung um 360° in Vorwärtsrichtung ein Maximum erreichen und anschließend in Rückwärtsrichtung ein Minimum erreichen.

Ein Übergang von Maximum zu Minimum kann abrupt sein.

Ein Übergang von Maximum zu Minimum kann auch fließend sein.

So kann ein Abtropfen verhindert werden.

Vorteilhaft ist eine Ausführung, wonach das Imprägniermaterial auf ein axiales Ende des Körpers geleitet wird.

Besonders vorteilhaft ist dies, wenn der Körper sich in einer in Bezug zur Horizontalen gekippten Lage befindet. Das Imprägniermaterial, z. B. Harz, wird vorteilhaft auf das axiale Ende des Körpers, welches bezüglich der Erdoberfläche höher liegt als das andere axiale Ende, aufgebracht.

Das Imprägniermaterial kann vorteilhaft durch die geneigte Stellung in Richtung des anderen axialen Endes fließen bzw. in Richtung eines Punktes, an welchem die Imprägnierung enden soll. Der Körper kann vollständig oder teilweise imprägniert werden.

Besonders vorteilhaft ist, wenn der Körper rotiert, wenn das Imprägniermaterial aufgebracht wird. Auf diese Weise kann eine besonders homogene Verteilung des Imprägniermaterials erreicht werden.

Alternativ oder zusätzlich kann die Düse verfahren werden.

Vorteilhaft ist eine Ausführung, wonach die Dosierdüse, vorzugsweise parallel zum Körper, verfahren wird.

Dies hat den Vorteil, dass jede Stelle des Körpers gut beträufelt werden kann.

Die Düse kann hierzu verfahren werden, während der Körper gedreht wird.

Die Düse kann auch verfahren werden, bevor der Körper gedreht wird und/oder nachdem der Körper gedreht wurde.

Vorteilhaft ist eine Ausführung, wonach der Körper im Bezug zur Horizontalen vertikal gekippt wird. Vorteilhaft ist hierbei ein Kippwinkel, der zwischen 5° und 60° bezüglich der Horizontalen liegt.

Vorteilhaft ist eine Ausführung, wonach der erste Winkel n·360° ist, wobei n eine natürliche Zahl ist.

Natürliche Zahlen sind 1, 2, 3, 4, 5, 6, 7, ....

Der Körper vollzieht vorteilhaft eine volle Umdrehung. Jedoch sind auch zwei oder mehr volle Umdrehungen möglich. Auch Umdrehungen <360° sind möglich.

Vorteilhaft ist eine Ausführung, wonach der zweite Winkel zwischen -(n·360° + 1°) und -(n·360° + 10°) liegt, vorzugsweise -(n·360° + 5°) ist, wobei n eine natürliche Zahl ist.

Dies hat den Vorteil, dass auch die Beträufelung gleichmäßig ist. Es soll verhindert werden, dass manche Stellem mit zu viel Imprägniermaterial beträufelt werden, was zu einem Abtropfen führen könnte. Das Abtropfen von Imprägniermaterial soll vermieden werden.

Eine besonders homogene Verteilung des Imprägniermaterials lässt sich durch eine beispielhafte Winkelfolge erreichen: 360°, -365°, +370°, ...

Vorteilhaft ist eine Ausführung, wonach der Körper abwechselnd in erster Drehrichtung um den ersten Winkel und in zweiter Drehrichtung um den zweiten Winkel bewegt wird, wobei der zweite Winkel wenigstens α₂ = - (α₁ + 1°) und höchstens α₂ = - (α₁ + 10°) ist, vorzugsweise α₂ = - (α₁ + 5°) ist.

Vorteilhaft wird der Körper während der Beträufelung derart bewegt.

Die Wicklung wird vor und/oder während und/oder nach der Beträufelung von Strom durchflossen.

Durch die joulesche Erwärmung der Wicklung wird vorteilhaft der gesamte Körper erwärmt. Eine Erwärmung mittels eines Ofens ist dann nicht mehr nötig, was zu einer Zeit- und Kostenersparnis führt. Zudem wird Energie gespart.

Der Körper kann vor, während und nach der Imprägnierung auf diese Weise erwärmt werden.

Vorteilhaft ist eine Ausführung, wonach eine dreiphasige Wicklung von Dreiphasenwechelstrom durchflossen wird, wobei eine einphasige Wicklung von Einphasenwechelstrom durchflossen wird.

Am Beispiel eines Stators mit dreiphasiger Wicklung erläutert werden vorteilhaft folgende Schritte ausgeführt: Die Zuleitungen des Stators werden an die Anschlussleitungen, die seitens einer Imprägniervorrichtung vorgesehen sind, angeschlossen bzw. mit diesen verbunden. Dies kann beispielsweise auch mittels einer Klemmplatte gelingen.

Ein Stromabgriff mittels Schleifkontakten ist auch möglich. In diesem Fall ist auch eine Dauerrotation des Körpers möglich.

Da Schleifkontakte jedoch mit vielen Nachteilen behaftet sind, z. B. Bürstenfeuer, wird eine Ausführung mit fest verbundenen Anschlussleitungen, z. B. mittels flexibler Litzenleiter mit geeignetem Querschnitt, im Rahmen der Erfindung bevorzugt.

Der Querschnitt der Litzenleiter ist vorteilhaft größer als der Querschnitt der Wicklung.

Die Anschlussleitungen sind mit einer Energieversorgungseinheit verbunden oder verbindbar, die vorzugsweise Energie in Form von Dreiphasenwechselstrom bereitstellt.

Die drei Phasen des Stators werden bestromt, wodurch sich die Wicklungen erwärmen. Die Wicklungen sind vorteilhaft als Kupferwicklungen ausgebildet.

Die Wicklungen können dauerhaft bestromt werden. Jedoch sind auch Pausen möglich.

Analog zum Beispiel "Stator" kann auch ein Rotor oder ein Transformator oder eine andere elektrische Maschine imprägniert werden.

Die Lösung der Aufgabe gelingt ferner gemäß Anspruch 12 durch eine Imprägniervorrichtung zur Imprägnierung eines wenigstens eine Wicklung tragenden Körpers, insbesondere für eine elektrische Maschine, insbesondere zur Durchführung des Verfahrens nach einem der vorhergehenden Ansprüche, aufweisend:
- einen Antrieb mit einer Antriebswelle, wobei der Antrieb zur Bewegung des Körpers um eine Rotationsachse ausgebildet ist, wobei die Antriebswelle wenigstens ein Befestigungselement zur lösbaren Anbindung des Körpers an die Antriebswelle aufweist,
- eine Träufeleinheit, wobei die Träufeleinheit zur Beträufelung des Körpers mit einem Imprägniermaterial ausgebildet ist,
- eine Anschlusseinheit, wobei die Anschlusseinheit zum Anschluss der Wicklung an eine elektrische Energieversorgung ausgebildet ist.

Die Anschlusseinheit kann eine Klemmplatte aufweisen, an welcher die Wicklungsenden anklemmbar sind.

Alternativ oder zusätzlich kann die Anschlusseinehit auch einzelne Leiter umfassen, die mit den Wicklungsenden verbindbar sind.

Alternativ oder zusätzlich kann die Anschlusseinheit auch Schleifkontakte umfassen.

Vorteilhaft ist eine Ausführung, wonach der Antrieb im Bezug zur Horizontalen vertikal kippbar ausgebildet ist.

Vorteilhaft ist eine Ausführung, wonach die Träufeleinheit eine Dosierdüse zur Ausleitung des Imprägniermaterials umfasst.

Die Lösung der Aufgabe gelingt ferner durch einen Rotor und/oder Stator, imprägniert nach einem derartigen Verfahren.

Die Erfindung bietet den Vorteil, dass ressourceneffizient imprägniert werden kann, da die auf den Körper aufgeträufelte Harzmenge exakt und individuell dosiert werden kann z. B. im Vergleich zu bekannten Tauchverfahren.

Es besteht die Möglichkeit, mehrkomponentige Harzsysteme zu verwenden, wie in EP 3 872 962 A2 bereits offenbart.

Diese mehrkomponentigen Harzsysteme weisen im gemischten Zustand eine derart hohe Reaktivität auf, dass eine Gelierung und eine Härtung bei Raumtemperatur oder nur leicht erhöhter Temperatur möglich sind.

Im Folgenden wird die Erfindung anhand der in den Figuren dargestellten Ausführungsbeispiele näher beschrieben und erläutert. Es zeigen:
- FIG 1: eine dynamoelektrische rotatorische Maschine,
- FIG 2 und 3: einen Körper,
- FIG 4: eine Imprägniervorrichtung,
- FIG 5: das Verfahren,
- FIG 6 und 7: eine Rotation,
- FIG 8 bis 11: einen Verlauf der Aufnahme des Imprägniermaterials,
- FIG 12 bis 14: eine Vernetzung,
- FIG 15: einen als digitaler Zwilling fungierendes Softwareobjekt.

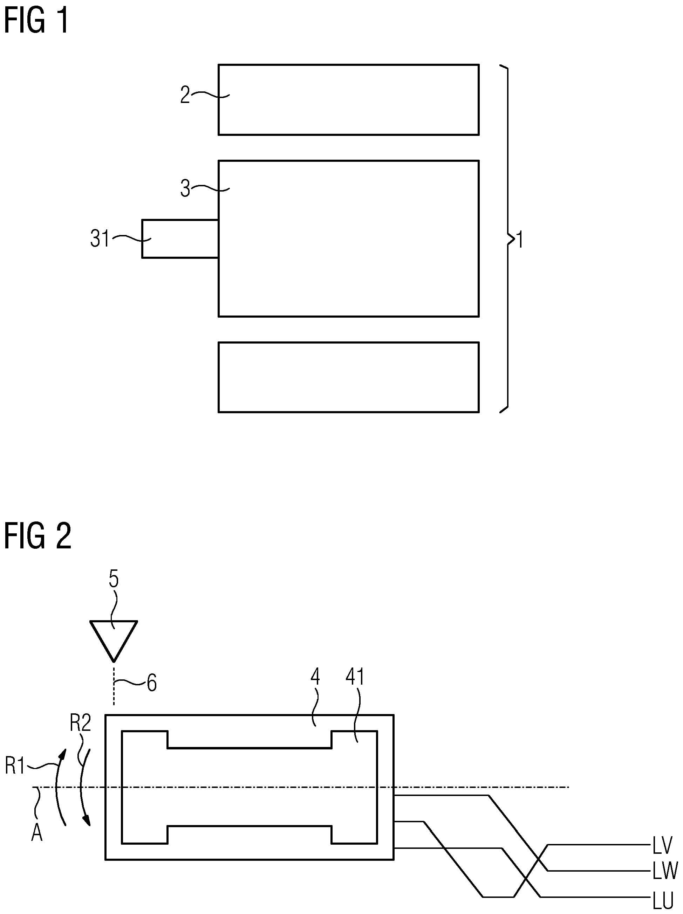

FIG 1 zeigt eine dynamoelektrische rotatorische Maschine 1 mit einem Stator 2, einem Rotor 3 und einer Welle 31.

Der Rotor und/oder Stator wurden mittels des beschriebenen Verfahrens imprägniert.

FIG 2 zeigt einen Körper 4, der eine Wicklung 41 trägt.

Der Körper 4 ist beispielsweise der in FIG 1 gezeigte Rotor 3 oder der Stator 2. Jedoch sind auch andere Körper, die eine Wicklung 41 tragen, mittels des Verfahrens imprägnierbar.

Der Körper 4 wird in der Figur imprägniert, indem dieser mittels eine Dosierdüse 5 Imprägniermaterial 6, insbesondere Harz oder eine Harz aufweisende Mischung, beträufelt wird.

Der Körper 4 wird vor und/oder während und/oder nach der Beträufelung um eine Rotationsachse A bewegt.

Die Wicklung 41 wird vor und/oder während und/oder nach der Beträufelung von Strom durchflossen.

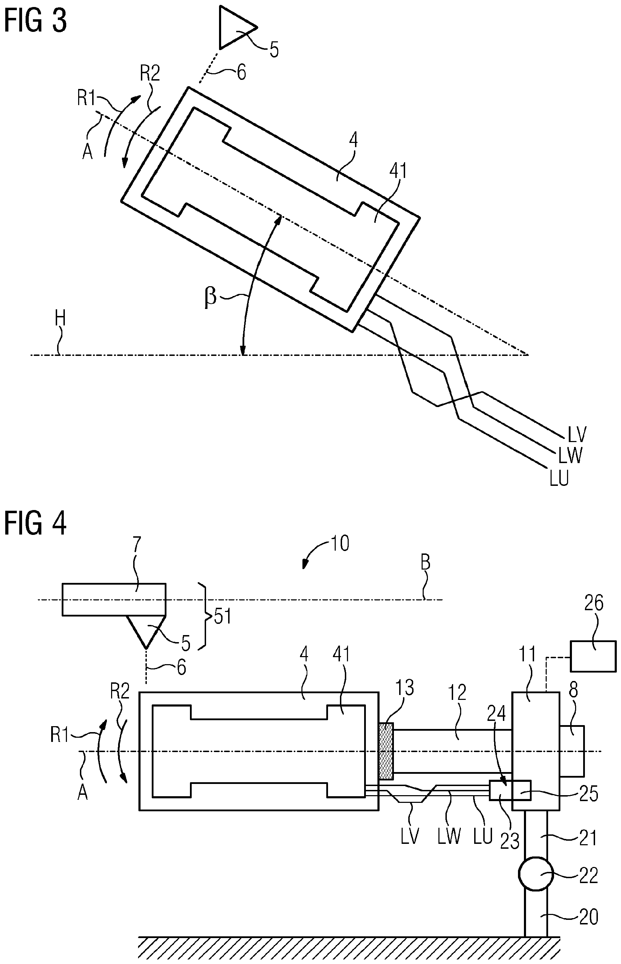

Dies gelingt in der Figur durch angeschlossene Litzenleiter LU, LV, LW. Diese sind vorteilhaft an eine Energieversorgungseinheit (siehe Bezugszeichen 25 in FIG 4) angeschlossen.

Durch den Stromfluss und einen damit einhergehenden Wärmeverlust, wird der Körper erwärmt.

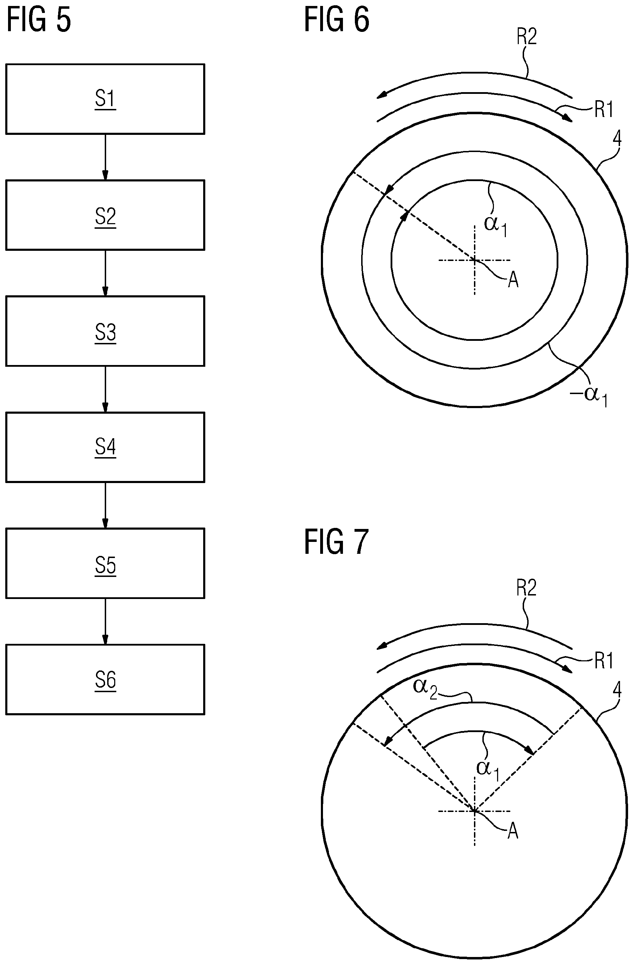

Das Bezugszeichen R1 zeigt, dass der Körper 4 um einen ersten Winkel in einer ersten Drehrichtung, vorzugsweise in positiver Drehrichtung, gedreht wird. Das Bezugszeichen R2 zeigt, dass der Körper um den negativen ersten Winkel gedreht wird. Dies wird in FIG 6 verdeutlicht.

Es ist auch möglich, dass der Körper um einen zweiten Winkel in einer zweiten Drehrichtung, vorzugsweise in negativer Drehrichtung, gedreht wird. Dies wird in FIG 7 verdeutlicht.

Vorteilhaft ist bei der Beträufelung, wenn der Körper abwechselnd in erster Drehrichtung um den ersten Winkel und in zweiter Drehrichtung um den zweiten Winkel bewegt wird, wobei der zweite Winkel wenigstens α2 = -(α1 + 1°) und höchstens α2 = -(α1 + 10°) ist, vorzugsweise α2 = -(α1 + 5°) ist.

FIG 3 zeigt den Körper 4, im Bezug zur Horizontalen vertikal gekippt ist. Vorteilhaft ist hierbei ein Kippwinkel β, der zwischen 5° und 60° bezüglich der Horizontalen liegt.

Besonders gut ist ein Kippwinkel β, der zwischen 10° und 35° bezüglich der Horizontalen liegt.

FIG 4 zeigt eine Imprägniervorrichtung 10.

Die Imprägniervorrichtung 10 zur Imprägnierung eines wenigstens eine Wicklung tragenden Körpers, insbesondere für eine elektrische Maschine 1, insbesondere zur Durchführung des Verfahrens nach einem der vorhergehenden Ansprüche, gemäß FIG 4 weist auf: Einen Antrieb 11 mit einer Antriebswelle 12, wobei der Antrieb 11 zur Bewegung des Körpers 4 um die Rotationsachse A ausgebildet ist. Die Antriebswelle 12 weist wenigstens ein Befestigungselement 13 zur lösbaren Anbindung des Körpers 4 an die Antriebswelle 12 auf.

Die in der Figur gezeigte Imprägniervorrichtung 10 weist zudem eine Träufeleinheit 51 auf, wobei die Träufeleinheit 51 zur Beträufelung des Körpers 4 mit dem Imprägniermaterial 6 ausgebildet ist.

Die Träufeleinheit 51 weist in der Figur die Dosierdüse 5 auf sowie ein Reservoir 7, in welchem das Imprägniermaterial 6 vorgehalten wird.

Die Träufeleinheit 51 kann z. B. entlang einer Achse B verfahren werden.

Zudem weist die gezeigte Imprägniervorrichtung 10 eine Anschlusseinheit 24 auf, wobei die Anschlusseinheit 24 zum Anschluss der Wicklung 41 an eine elektrische Energieversorgung ausgebildet ist. Hierzu ist in der Figur die Energieversorgungseinheit 25 dargestellt.

Die Wicklung 41 ist in der Figur mittels der Litzenleiter LU, LV, LW an die Energieversorgungseinheit angeschlossen. In der Figur gelingt dies durch eine Klemmplatte 23.

Auf diese Weise wird ein Stromfluss durch die Wicklung ermöglicht.

Die Litzenleiter sind vorteilhaft flexibel.

Die Litzenleiter sind vorteilhaft so lang, dass sie auch bei z. B. drei vollen Umdrehungen des Körpers die Wicklung 41 mit der Energieversorgungseinheit 25 verbinden und nicht abreißen bzw. sich nicht lösen. Sie können sich beim Drehen um die Antriebswelle 12 wickeln und an dieser anliegen.

Je nach Anwendung, sind die Litzenleiter so lang, dass zwischen einer und zehn vollen Umdrehungen möglich sind.

Wenn der Körper 4 z. B. in die Gegenrichtung bewegt wird, werden die auf der Antriebswelle 12 aufgewickelten Litzenleiter LU, LV, LW wieder abgewickelt.

Es ist auch möglich, mittels Schleifkontakten Strom von der Energieversorgungseinheit für die Wicklung abzugreifen. Jedoch wird die in der Figur dargestellte Ausführungsform bevorzugt.

Die Figur zeigt zudem einen Geber 8.

Die Figur zeigt einen Arm 20 und einen Arm 21, die mittels eines Gelenks 22 verbunden sind. Dies ist eine beispielhafte Ausführungsform, die ein in Bezug zur Horizontalen vertikales Kippen des Antriebs 11 bzw. des Körpers 4 ermöglicht. Es sind auch andere Formen möglich.

Beispielsweise wird ein Stator 2 oder Rotor 3 (siehe FIG 1) auf die gezeigte Antriebswelle 12 aufgespannt und mittels des Befestigungselements 13 befestigt. Auch andere Aufnahmevorrichtungen sind möglich. Vorteilhaft ist eine Aufnahmevorrichtung, die dazu ausgebildet ist, den Körper 4 um seine Längsachse zu rotieren.

Das Imprägniermaterial 6 ist vorzugsweise flüssig. Im Fall eines zu imprägnierenden Stators wird das Imprägniermaterial 6 beispielsweise auf die Wickelköpfe geträufelt und kann sich aufgrund der Drehbewegung tropffrei und homogen im Wickelkopf verteilen. Durch auftretende Kapillarkräfte kann wird das Imprägniermaterial vorteilhaft in vorliegende Nuten gezogen werden.

Da der Stator durch die Bestromung erwärmt ist bzw. erwärmt wird, wird z. B. die Fließfähigkeit des Imprägniermaterials 6, vorzugsweise des Harzes, verbessert. Zudem wird so besonders gut eine Gelierung und Härtung des Imprägniermaterials 6 herbeigeführt.

FIG 5 zeigt das Verfahren.

In einem Verfahrensschritt S1 wird der Körper 4 (siehe FIG 4) von Strom durchflossen. Der Körper 4 erwärmt sich dadurch.

Es ist möglich, eine definierte Zeitspanne abzuwarten, um mit Verfahrensschritt S2 fortzufahren. Alternativ wird unmittelbar danach im Verfahrensschritt S2 mittels der Dosierdüse 5 Imprägniermaterial 6 zur Beträufelung des Körpers 4 ausgeleitet.

Der Körper 4 wird in einem Verfahrensschritt S3 in die erste Drehrichtung R1 rotiert und/oder in die zweite Drehrichtung R2 rotiert. Dies kann wiederholt werden.

In einem verfahrensschritt S4 wird eine Kapazität zwischen zwei Phasen der Wicklung ermittelt. Alternativ oder zusätzlich wird eine Kapazität zwischen einer Phase der Wicklung gegen Erdpotential ermittelt wird, wobei eine Menge aufgenommenen Imprägniermaterials durch eine Änderung der Kapazität ermittelt wird.

In einem Verfahrensschritt S5 wird eine Dosiermenge und/oder ein Dosierort und/oder eine Einspeisung von Energie in die Wicklung zur Änderung einer Wicklungstemperatur, insbesondere der einzelnen Phasen, in Abhängigkeit der ermittelten Kapazität angepasst.

Die Beträufelung ist in einem Verfahrensschritt S6 vollständig. Die Ausleitung des Imprägniermaterials wird angehalten und es kann ein Aushärten erfolgen.

Die Dosierdüse 5 kann jedoch auch, während sie Imprägniermaterial ausleitet, verfahren werden. Die Ausleitung des Imprägniermaterials kann jedoch auch gestoppt werden, wenn die Dosierdüse verfahren werden soll.

Eine Kombination von Erwärmung der Wicklung, wobei die Wicklung vorteilhaft Kupfer aufweist, durch die beschriebene Bestromung sowie das Aufbringen des Imprägniermaterials durch Träufeln und die Pendelbewegung des zu imprägnierenden Körpers verhindert ein Abtropfen des Imprägniermaterials. Eine homogene Verteilung des Imprägniermaterials, beispielsweise im Wickelkopf, oder z. B. in Nuten von Rotor oder Stator kann dadurch gut erreicht werden.

Im Verfahren kann - z. B. je nach Art und Größe des Körpers - eine Umkehrgeschwindigkeit, eine Position der Dosierdüsen, zeitweise Verringerung der Dosiermenge vor und während der Umkehr sowie eine zeitliche Varianz aufeinander folgender Umkehrprozesse variiert werden.

Die Dosiermenge kann z.B. während einer vollen Umdrehung maximiert werden, um dann während des Umkehrprozesses minimiert zu werden, um ein Abtropfen zu verhindern.

Der Umkehrprozess kann z.B. nach jeweils 360° (oder ganze Vielfache davon) oder aber nach variablen Rotationswinkeln (z.B. 1. 360°, 2. -365°, 3. +370°, ...) geschehen, um eine möglichst homogene Verteilung zu gewährleisten.

Die Anschlussleitungen können auch derart flexibel und lang ausgestaltet sein, dass nur wenige oder gar keine Umkehrungen während des eigentlichen Dosierprozesses notwendig sind. Die Länge und Art der Anschlussleitungen sind vorteilhaft so zu wählen, dass möglichst geringe joulesche Verluste in den Anschlussleitungen vorhanden sind.

Besonders vorteilhaft sind hierbei die beschriebenen flexiblen Litzenleiter mit einem geeigneten Querschnitt, der z. B. nennenswert größer ist als der Querschnitt der Wicklung. Jedoch sind auch andere Ausführungsformen möglich.

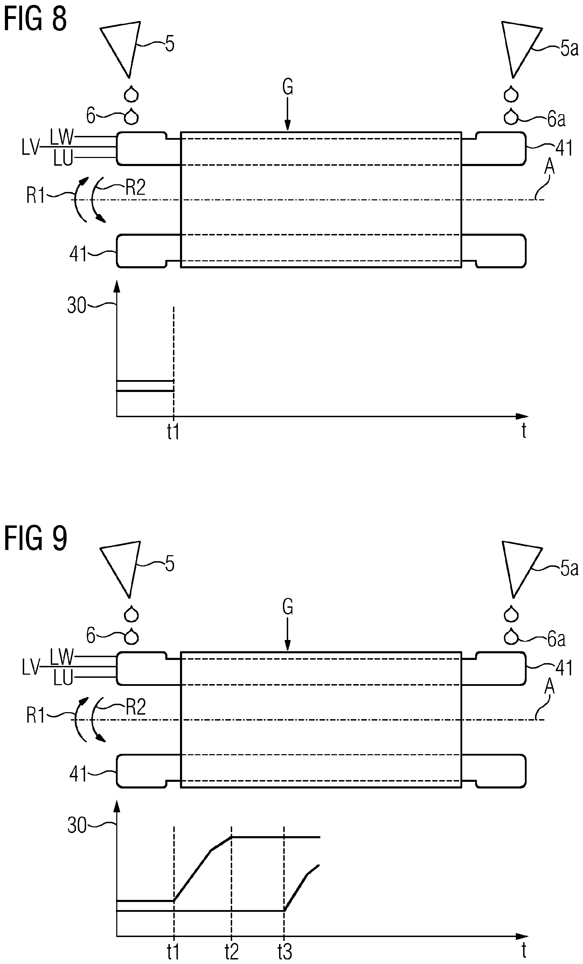

FIG 8 - FIG 11 zeigen den Verlauf der Aufnahme des Imprägniermaterials, insbesondere Harzaufnahme.

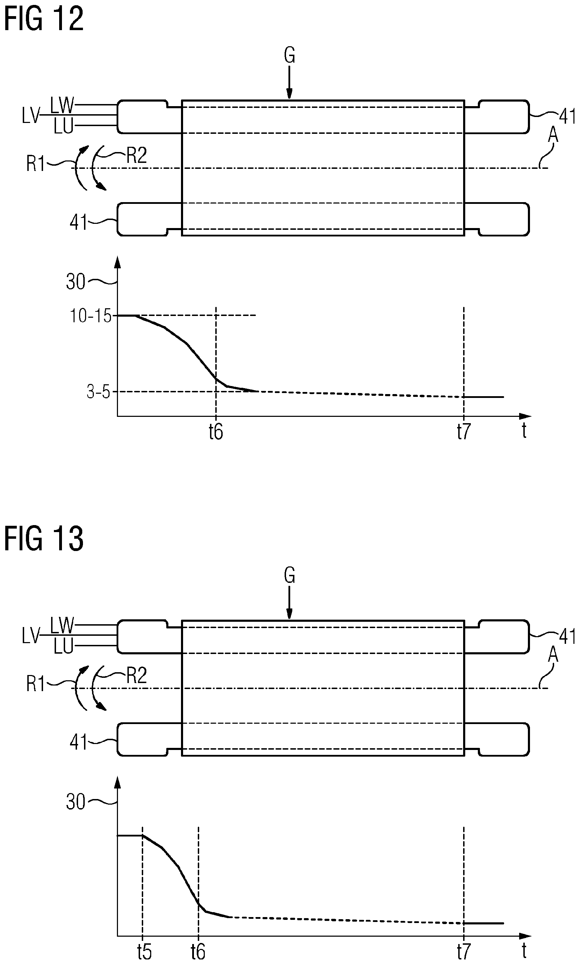

Die Abszisse kennzeichnet einen zeitlichen Verlauf t, der die Aufnahme des Imprägniermaterials, siehe FIG 8 bis 11, und eine Vernetzung, siehe FIG 12 bis 14 umfasst. Die Ordinate kennzeichnet eine Kapazität 30, insbesondere eine Kapazitätserhöhung in den FIG 8 bis 11 sowie eine Kapazitätserniedrigung in den FIG 12 bis 14.

Es wird eine Erhöhung der Kapazität 30 zwischen den Phasen U und V, V und W sowie U und W angezeigt (siehe M1), wie auch eine Kapazitätserhöhung zwischen U gegen Erde, V gegen Erde und W gegen Erde (gezeigt durch Ground G, siehe M2).

Die Aufnahme des Imprägniermaterials 6 beginnt bei t1 in FIG 1, indem die Düse 5 das Imprägniermaterial 6, vorzugsweise tröpfchenweise, auf die Wicklung 41 aufbringt bzw. die Wicklung 41 beträufelt. Die Wicklung 41 ist vorteilhaft wenigstens teilweise in Nuten des Körpers 4, insbesondere Blechpaket, angeordnet. An einem axialen vorderen Ende und an einem axialen hinteren Ende sind vorteilhaft Wickelköpfe ausgebildet.

Zusätzlich kann an einem anderen Ende der Wicklung 41 eine weitere Düse 5a Imprägniermaterial 6a aufbringen.

In den FIG 9 - 11 ist sichtbar, dass die Wicklung Imprägniermaterial 6 aufgenommen hat. In t2 wird eine Sättigung der Wickelköpfe erreicht, in t3 ein Einfließen in den Nutaustritt, in t4 eine Sättigung der Nuten.

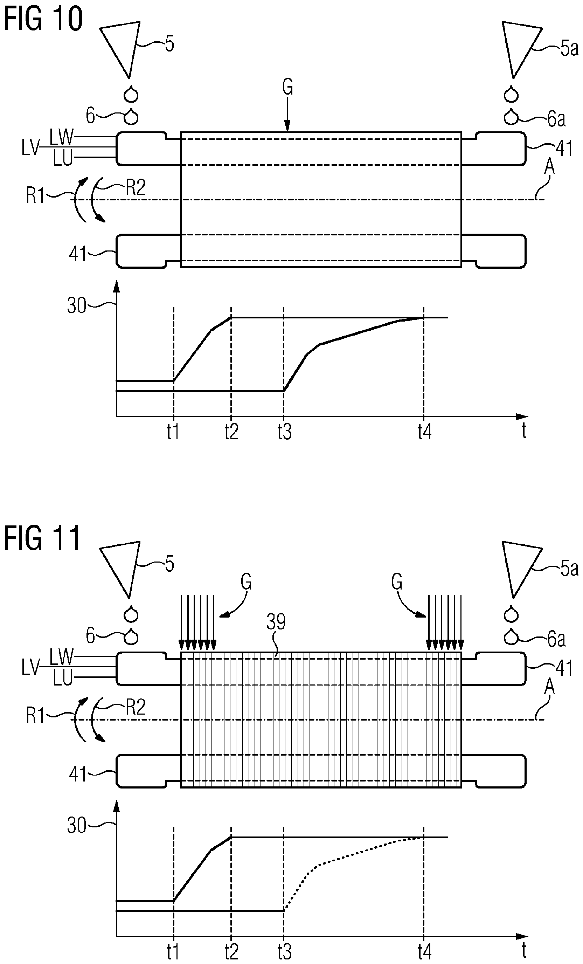

FIG 11 zeigt zudem, dass durch eine Kontaktierung von Einzelblechen 39 eine bessere Auflösung möglich ist und somit eine Kapazität von U gegen Erde, V gegen Erde und W gegen Erde besser ermittelt werden kann.

Die Erfindung ist von Vorteil, da dadurch eine Messung und Verarbeitung der elektrischen Kapazitäten zwischen einzelnen Phasen U, V und W bzw. der jeweiligen Kapazitäten zwischen den vorgenannten Phasen und dem Eisenblech (Erde) möglich ist. Aus daraus, vorteilhaft in Echtzeit, erhaltenen Informationen können im laufenden Prozess Parameter, wie Dosiermenge, Dosierort (insbesondere Wickelkopf innerhalb und/oder außerhalb, Nutaustritt, verschiedene Phasen), Wicklungstemperatur der Einzelphasen angepasst werden.

Ein besonderer Vorteil ist dadurch gegeben, dass die Träufeltechnologie, insbesondere die Möglichkeit, die einzubringende Harzmenge gezielt zeit- und ortsaufgelöst zu justieren, sowie die Möglichkeit, die Wicklungstemperatur über die angeschlossenen Leitungen des direkt und phasenindividuell einstellen zu können in Kombination mit dem Wissen über die Harzfüllmenge, insbesondere innerhalb der Wickelköpfe sowie der einzelnen Nuten, einen hochpräzisen, bauteilspezifischen Prozess erlaubt. Zudem können Energie und Ressourcen gespart werden.

Die Messung der Kapazitäten kann in zwei Bereiche, einen Dosierbereich (siehe FIG 8 bis FIG 11) und einen Gelier- bzw. Härtungsbereich (FIG 12 bis FIG 14) aufgeteilt werden.

Im Laufe der Eindosierung des Imprägniermaterials 6 bzw. 6a kommt es vorteilhaft zur Verdrängung der Luft in den Zwischenräumen der Wicklung, insbesondere in den Lackdraht-Zwischenräumen, durch das, vorzugsweise flüssige, Imprägniermaterial. Dieses erhöht vorteilhaft aufgrund seiner hohen dielektrischen Zahl (>10) die gemessene Kapazität sukzessive.

Hierbei ist eine Differenzierung der Messpunkte wichtig für die Verteilung des Imprägniermaterials, was in den Figuren dargelegt ist.

Eine Erhöhung der Phase-Phase-Kapazität zeigt vorteilhaft die Füllung des Imprägniermaterials in den Wickelköpfen an (aufgelöst nach den einzelnen Bereichen des Wickelkopfes). Eine Erhöhung der Phase(n)-Erde-Kapazität zeigt vorteilhaft die Füllmenge in den einzelnen Nuten an.

Möglich ist zudem ein Abgreifen der Erdelektrode an jedem Einzelblech 39, vgl FIG 11, mit einer kleinen Messspitze. Dies kann die Auflösung innerhalb der Nuten zusätzlich verbessern.

Über die Kenntnis welche Phase in welcher Nut des rollierenden Stators läuft, sowie in welchen Bereichen des Wickelkopfes jeweils zwei der drei Phasen aneinander liegen und somit maßgeblich den kapazitiven Aufbau beeinflussen, kann zielgerichtet, insbesondere über eine Synchronisierung der Rotationsgeschwindigkeit und damit der Winkelposition der kritischen Bereiche mit der Dosiermenge, eine optimale Verteilung des Imprägniermaterials gewährleistet werden. Durch eine zeitgleiche Messung oder in kurzen Sequenzen von beispielsweise fünf bis zehn Sekunden, z. B. zwischen Heizphasen, von Temperatur und Kapazität kann eine Füllstandsverteilung über die Zeit ermittelt werden.

Im weiteren Verlauf, siehe FIG 12 bis 14, der Gelierung bzw. der Härtung des verteilten Imprägniermaterials, z. B. Reaktivharzes, innerhalb der Wicklung 41 kommt es vorteilhaft aufgrund der Vernetzung zu einer Verkleinerung der Dielektrizitätszahl bis hin zum Endzustand der vollständigen Vernetzung, welche, je nach Harzchemie sowie Anzahl und Beschaffenheit polarer Gruppen eine Dielektrizitätszahl vorteilhaft zwischen 2 und 5 aufweist. Dieser Vorgang schlägt sich vorteilhaft in der Messung der Kapazitäten nieder, wodurch durch eine Messung der veränderlichen Kapazitäten eine Aussage über den Vernetzungsgrad und damit über die ggf. verbleibende Viskosität getroffen werden kann, welche bei einer Träufelanlage zykluszeitbestimmend ist.

Insbesondere mittels der thermokinetischen Simulationen, welche Teil der europäischen Patentanmeldung mit der Anmeldenummer 22183330.4 sind, kann hierbei ein prozesstechnischer Vorteil generiert werden, indem beispielsweise bauteilindividuell ein notwendiger Geliergrad, der je nach Bauteilgröße und Beschaffenheit variieren kann, im laufenden Betrieb ermittelt werden und somit eine Bauteilentnahme veranlasst werden bzw. gezielt über Einzelphasenbestromung die Härtungsreaktion katalysiert werden kann.

FIG 12, 13 und 14 zeigen eine Erniedrigung der Kapazität 30. Die Kapazitätserniedrigung ist im Wesentlichen eine Folge der Gelierung (Vernetzung).

In t5 (siehe FIG 12 und 13) liegt ein Beginn der Vernetzung, in t6 ein Gelierpunkt, in t7 liegt eine vollständige Vernetzung bei Raumtemperatur vor.

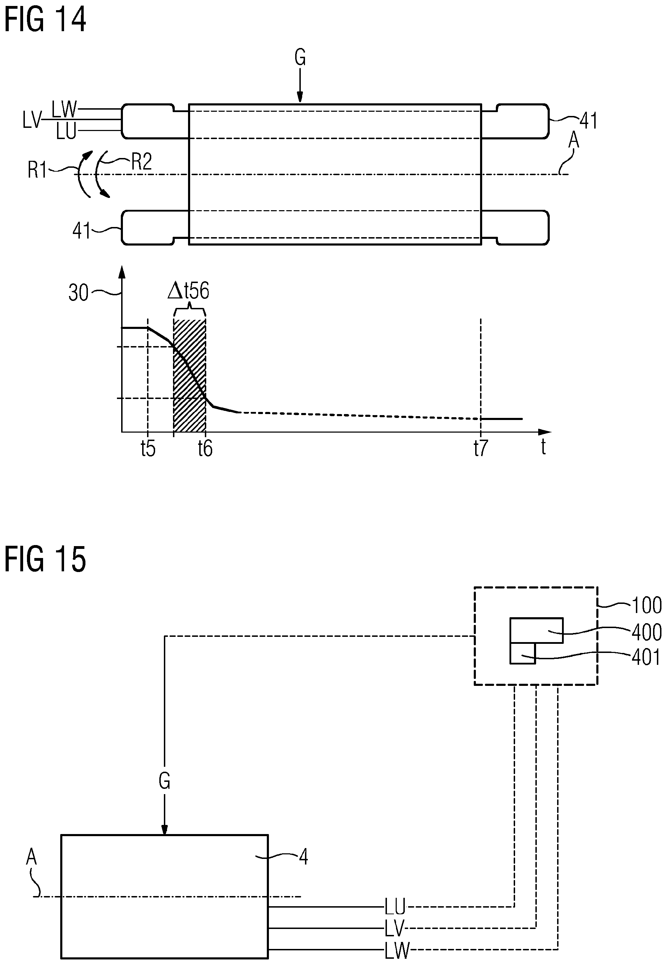

Im Zeitfenster Δt56, siehe FIG 14, liegt vorteilhaft ein tropffreier Stator vor, wobei dies insbesondere taktzeitenabhängig und auch variantenabhängig ist.

Kapazitätsschwellwerte (BEZUGSZEICHEN EINFÜGEN) können einen Vernetzungsgrad anzeigen und Taktzeiten somit in situ optimiert werden. Dies gelingt vorteilhaft dann besonders gut, wenn ein Kapazitätsverlauf über den Vernetzungsvorgang in Korrelation mit der Viskosität bekannt ist.

Da das Imprägniermaterial als, vorteilhaft flüssiges, Dielektrikum während der Imprägnierung sukzessive Luft verdrängt, gilt vorteilhaft:
Kapazität ~ ε₀εᵣ Geometriekonstante

εᵣ von Luft ist 1, εᵣ von flüssigem Harz liegt vorteilhaft zwischen 10 und 15.

Die Vereinbarung von Träufeln, also insbesondere das gezielte Eindosieren einer Harzmenge in spezielle Bereiche des Stators, mit der Möglichkeit des Leitungsanschlusses (auch Reversierträufeln genannt), bietet die Möglichkeit, verschiedene Messungen am Stator oder einem anderen Körper, der eine Wicklung aufweist, im laufenden Prozess durchzuführen und eine zielgerichtete bzw. partielle Aufheizung der Wicklung zu realisieren. Somit kann erstmals varianzunabhängig im sog. One piece flow individuell imprägniert und gehärtet werden. Daraus bietet die Möglichkeit von Material- und Energieeinsparungen sowie Taktzeitenoptimierungen und somit Produktivität in der Fertigung.

FIG 15 zeigt einen als digitaler Zwilling eines wenigstens eine Wicklung 41 tragenden Körpers 4 fungierendes Softwareobjekt 400. Der Körper 4 wird mittels des beschriebenen Verfahrens imprägniert.

Ein digitaler Zwilling ist vorteilhaft ein digitales Abbild bzw. eine datentechnische Entsprechung des Körpers 4, also bspw. des Rotors und/oder des Stators.

Der digitale Zwilling ist somit vorteilhaft ein Datensatz, welcher direkt oder indirekt alle diejenigen Daten 401 umfasst, die zur Beschreibung der relevanten Eigenschaften des Körpers 4 notwendig sind. Die Eigenschaften sind z. B. Maße des Körpers.

Der digitale Zwilling ist für das Verfahren zur Imprägnierung besonders vorteilhaft. Wenn der Körper 4 mit einem, vorzugsweise Harz aufweisenden, Imprägniermaterial 6 beträufelt wird und eine Kapazität 30 zwischen zwei Phasen der Wicklung ermittelt wird und/oder eine Kapazität 30 zwischen einer Phase der Wicklung 41 gegen Erdpotential G ermittelt wird und eine Menge aufgenommenen Imprägniermaterials durch eine Änderung der Kapazität 30 ermittelt wird, kann der Körper 4 vor und/oder während und/oder nach der Beträufelung um eine Rotationsachse A bewegt werden, insbesondere um das Imprägniermaterial gut zu verteilen. Das Imprägniermaterial kann so gut in bspw. Nuten einziehen.

Es besteht die Möglichkeit, durch den digitalen Zwilling zu erfahren, wie lange noch geträufelt werden sollte oder ob eine Rotationsbewegung nötig ist, um gute Ergebnisse zu erzielen. Zudem kann durch den digitalen Zwilling ein Wissen darüber erreicht werden, welche Dosiermenge und/oder welcher Dosierort welche Einspeisung von Energie in die Wicklung zur Änderung einer Wicklungstemperatur nötig ist.
So kann z. B. eine Steuerung für Verbesserungen der Imprägnierung angewiesen werden.

## Patentansprüche

1. Verfahren zur Imprägnierung eines wenigstens eine Wicklung (41) tragenden Körpers (4), insbesondere für eine elektrische Maschine (1), beispielsweise für einen Rotor (3) oder Stator (2), wobei der Körper (4) mit einem, vorzugsweise Harz aufweisenden, Imprägniermaterial (6) beträufelt wird, wobei eine Kapazität (30) zwischen zwei Phasen (U, V, W) der Wicklung (41) ermittelt wird und/oder wobei eine Kapazität (30) zwischen einer Phase (U, V, W) der Wicklung (41) gegen Erdpotential (G) ermittelt wird, wobei eine Menge aufgenommenen Imprägniermaterials durch eine Änderung der Kapazität (30) ermittelt wird, wobei der Körper (4) vor und/oder während und/oder nach der Beträufelung um eine Rotationsachse (A) bewegt wird, wobei die Wicklung (41) vor und/oder während und/oder nach der Beträufelung zur Erwärmung der Wicklung (41) von Strom durchflossen wird, wobei eine Dosiermenge und/oder ein Dosierort und/oder eine Einspeisung von Energie in die Wicklung (41) zur Änderung einer Wicklungstemperatur, insbesondere der einzelnen Phasen, in Abhängigkeit der ermittelten Kapazität angepasst wird.

2. Verfahren nach Anspruch 1, wobei die Kapazität zyklisch ermittelt wird.

3. Verfahren nach Anspruch 2, wobei ein Zyklus wenigstens zwei Sekunden und höchstens 20 Sekunden ist, vorzugsweise wenigstens fünf und höchstens zehn Sekunden ist.

4. Verfahren nach Anspruch 1, wobei der Körper (4) um einen ersten Winkel (α₁) in einer ersten Drehrichtung, vorzugsweise in positiver Drehrichtung (R1), gedreht wird, wobei der Körper (4) um den negativen ersten Winkel -(α₁) oder einen zweiten Winkel (α₂) in einer zweiten Drehrichtung (R2), vorzugsweise in negativer Drehrichtung, gedreht wird.

5. Verfahren nach einem der vorhergehenden Ansprüche, wobei der Körper (4) in der ersten Drehrichtung (R1) mit einer ersten Drehgeschwindigkeit bewegt wird, wobei der Körper (4) in der zweiten Drehrichtung (R2) mit einer zweiten Drehgeschwindigkeit bewegt wird, wobei die erste Drehgeschwindigkeit größer ist als die zweite Drehgeschwindigkeit.

6. Verfahren nach einem der vorhergehenden Ansprüche, wobei die Drehgeschwindigkeit in Abhängigkeit der ermittelten Kapazität angepasst wird.

7. Verfahren nach einem der vorhergehenden Ansprüche, wobei das Imprägniermaterial (6) mittels einer Dosierdüse (5) auf den Körper (4) bzw. in Richtung des Körpers (4) geleitet wird.

8. Verfahren nach einem der vorhergehenden Ansprüche, wobei das Imprägniermaterial (6) auf ein axiales Ende des Körpers (4) geleitet wird.

9. Verfahren nach einem der vorhergehenden Ansprüche, wobei die Dosierdüse (5), vorzugsweise parallel zum Körper (4), verfahren wird.

10. Verfahren nach einem der vorhergehenden Ansprüche, wobei der Körper (4) im Bezug zur Horizontalen vertikal gekippt wird.

11. Verfahren nach einem der vorhergehenden Ansprüche, wobei der erste Winkel (α₁) n·360° ist, wobei n eine natürliche Zahl ist.

12. Verfahren nach einem der vorhergehenden Ansprüche, wobei der zweite Winkel (α₂) zwischen -(n·360° + 1°) und -(n·360° + 10°) liegt, vorzugsweise -(n·360° + 5°) ist, wobei n eine natürliche Zahl ist.

13. Verfahren nach einem der vorhergehenden Ansprüche, wobei der Körper (4) abwechselnd in erster Drehrichtung (R1) um den ersten Winkel (α₁) und in zweiter Drehrichtung (R2) um den zweiten Winkel (α₂) bewegt wird, wobei der zweite Winkel wenigstens α₂ = - (α₁ + 1°) und höchstens α₂ = - (α₁ + 10°) ist, vorzugsweise α₂ = -(α₁ + 5°) ist.

14. Verfahren nach einem der vorhergehenden Ansprüche, wobei eine dreiphasige Wicklung von Dreiphasenwechelstrom durchflossen wird, wobei eine einphasige Wicklung von Einphasenwechelstrom durchflossen wird.

15. Imprägniervorrichtung (10) zur Imprägnierung eines wenigstens eine Wicklung (41) tragenden Körpers (4), insbesondere für eine elektrische Maschine (1), insbesondere zur Durchführung des Verfahrens nach einem der vorhergehenden Ansprüche, aufweisend:
- einen Antrieb (11) mit einer Antriebswelle (12), wobei der Antrieb (11) zur Bewegung des Körpers (4) um eine Rotationsachse (A) ausgebildet ist, wobei die Antriebswelle (12) wenigstens ein Befestigungselement (13) zur lösbaren Anbindung des Körpers (4) an die Antriebswelle (12) aufweist,
- eine Träufeleinheit (51), wobei die Träufeleinheit (51) zur Beträufelung des Körpers (4) mit einem Imprägniermaterial (6) ausgebildet ist,
- eine Anschlusseinheit (24), wobei die Anschlusseinheit (24) zum Anschluss der Wicklung (41) an eine elektrische Energieversorgung (25) ausgebildet ist.

16. Körper, aufweisend wenigstens eine Wicklung, insbesondere Rotor (3) und/oder Stator (2), imprägniert nach einem Verfahren nach einem der Ansprüche 1 bis 14.

17. Verfahren zur Erzeugung eines als digitaler Zwilling eines wenigstens eine Wicklung (41) tragenden Körpers (4) fungierenden Softwareobjekts (400), wobei der Körper (4) mittels eines Verfahrens nach einem der Ansprüche 1 bis 14 imprägniert wird.
